(19) Europäisches Patentamt
European Patent Office
Office européen des brevets

(11) EP 1 777 767 B2

(12) **NEW EUROPEAN PATENT SPECIFICATION**
After opposition procedure

(45) Date of publication and mention
of the opposition decision:
**02.11.2016 Bulletin 2016/44**

(45) Mention of the grant of the patent:
**29.12.2010 Bulletin 2010/52**

(21) Application number: **05753377.0**

(22) Date of filing: **22.06.2005**

(51) Int Cl.:
*H01M 8/02* (2006.01)     *H01M 8/10* (2006.01)
*H01B 1/06* (2006.01)     *H01B 13/00* (2006.01)
*C08J 5/22* (2006.01)     *C08L 27/12* (2006.01)

(86) International application number:
**PCT/JP2005/011467**

(87) International publication number:
**WO 2006/006357 (19.01.2006 Gazette 2006/03)**

(54) **ELECTROLYTE MEMBRANE FOR SOLID POLYMER FUEL CELL, METHOD FOR PRODUCING SAME AND MEMBRANE ELECTRODE ASSEMBLY FOR SOLID POLYMER FUEL CELL**

ELEKTROLYTMEMBRAN FÜR EINE FESTPOLYMER-BRENNSTOFFZELLE, HERSTELLUNGSVERFAHREN DAFÜR UND MEMBRANELEKTRODENBAUGRUPPE FÜR EINE FESTPOLMER-BRENNSTOFFZELLE

MEMBRANE ÉLECTROLYTIQUE POUR PILE À COMBUSTIBLE POLYMÈRE SOLIDE, PROCÉDÉ DE FABRICATION DE LADITE MEMBRANE ET ENSEMBLE D"ÉLECTRODE À MEMBRANE POUR PILE À COMBUSTIBLE POLYMÈRE SOLIDE

(84) Designated Contracting States:
**AT BE BG CH CY CZ DE DK EE ES FI FR GB GR HU IE IS IT LI LT LU MC NL PL PT RO SE SI SK TR**

(30) Priority: **12.07.2004   JP 2004204704
04.08.2004   JP 2004228192
13.09.2004   JP 2004265176**

(43) Date of publication of application:
**25.04.2007 Bulletin 2007/17**

(73) Proprietor: **Asahi Glass Company, Limited
Chiyoda-ku
Tokyo 100-8405 (JP)**

(72) Inventor: **ENDOH, Eiji
c/o Asahi Glass Company, Limited
Yokohama-shi, Kanagawa 2218755 (JP)**

(74) Representative: **Müller-Boré & Partner
Patentanwälte PartG mbB
Friedenheimer Brücke 21
80639 München (DE)**

(56) References cited:
**EP-A- 1 702 378       WO-A-03/083963
JP-A- 6 103 992       JP-A- 2000 106 203
JP-A- 2000 231 928     JP-A- 2001 118 591
JP-A- 2001 118 591     JP-A- 2001 185 164
JP-A- 2003 086 188     JP-A- 2003 123 777
JP-A- 2004 018 573     JP-A- 2004 288 620
JP-A- 2005 019 232     JP-A- 2005 071 760
JP-A- 2005 149 859     US-A- 5 840 192
US-A1- 2002 093 008    US-A1- 2003 008 196
US-A1- 2004 112 754**

EP 1 777 767 B2

**Description**

The present invention relates to an electrolyte membrane for a polymer electrolyte fuel cell, whereby the initial output voltage is high, and the high output voltage can be obtained over a long period of time.

A fuel cell is a cell whereby a reaction energy of a gas as a feed material is converted directly to electric energy, and a hydrogen-oxygen fuel cell presents no substantial effect to the global environment since its reaction product is only water in principle. Especially, a polymer electrolyte fuel cell employing a polymer membrane as an electrolyte, can be operated at room temperature to provide a high power density, as a polymer electrolyte membrane having high ion conductivity has been developed, and thus is expected to be a prospective power source for mobile vehicles such as electric cars or for small cogeneration systems, along with an increasing social demand for an energy or global environmental problem in recent years.

In a polymer electrolyte fuel cell, a proton conductive ion exchange membrane is commonly employed as a polymer electrolyte, and an ion exchange membrane made of a perfluorocarbon polymer having sulfonic acid groups, is particularly excellent in the basic properties. In the polymer electrolyte fuel cell, gas diffusion type electrode layers are disposed on both sides of the ion exchange membrane, and power generation is carried out by supplying a gas containing hydrogen as a fuel and a gas (such as air) containing oxygen as an oxidizing agent to the anode and the cathode, respectively.

In the reduction reaction of oxygen at the cathode of the polymer electrolyte fuel cell, the reaction proceeds via hydrogen peroxide ($H_2O_2$), and it is worried that the electrolyte membrane may be deteriorated by the hydrogen peroxide or peroxide radicals to be formed in the catalyst layer. Further, to the anode, oxygen molecules will come from the cathode through the membrane, and it is worried that hydrogen peroxide or peroxide radicals may be formed at the anode too. Especially when a hydrocarbon membrane is used as the polymer electrolyte membrane, it is poor in the stability against radicals, which used to be a serious problem in an operation for a long period of time.

For example, the first practical use of a polymer electrolyte fuel cell was when it was adopted as a power source for a Gemini space ship in U.S.A., and at that time, a membrane having a styrene/divinylbenzene polymer sulfonated, was used as an electrolyte membrane, but it had a problem in the durability over a long period of time. As a technique to overcome such problems, a method of having a compound with a phenolic hydroxyl group or a transition metal oxide capable of catalytically decomposing hydrogen peroxide incorporated to the polymer electrolyte membrane (see Patent Document 1) or a method of supporting catalytic metal particles in the polymer electrolyte membrane to decompose hydrogen peroxide (see Patent Document 2) is also known. However, such a technique is a technique of decomposing formed hydrogen peroxide, and is not one attempted to suppress decomposition of the ion exchange membrane itself. Accordingly, although at the initial stage, the effect for improvement was observed, there was a possibility that a serious problem would result in the durability over a long period of time. Further, there was a problem that the cost tended to be high.

As opposed to such a hydrocarbon type polymer, an ion exchange membrane made of a perfluorocarbon polymer having sulfonic acid groups as a polymer remarkably excellent in the stability against radicals, has been known. In recent years, a polymer electrolyte fuel cell employing an ion exchange membrane made of such a perfluorocarbon polymer is expected as a power source for e.g. automobiles or housing markets, and a demand for its practical use is increasing, and its developments are accelerated. In such applications, its operation with particularly high efficiency is required. Accordingly, its operation at higher voltage is desired, and at the same time, cost reduction is desired. Further, from the viewpoint of the efficiency of the entire fuel cell system, an operation under low or no humidification is required in many cases.

However, it has been reported that even with a fuel cell employing an ion exchange membrane made of a perfluorocarbon polymer having sulfonic acid groups, the stability is very high in operation under high humidification, but the voltage degradation is significant in operation under low or no humidification conditions (see Non-Patent Document 1). Namely, it is considered that, also in the case of the ion exchange membrane made of a perfluorocarbon polymer having sulfonic acid groups, deterioration of the electrolyte membrane proceeds due to hydrogen peroxide or peroxide radicals in operation under low or no humidification.

Furthermore, a method of fabricating a membrane-electrode assembly, particularly for PEM fuel cells, wherein the membrane-electrode assembly comprises a polymer-electrolyte membrane, has been described in Patent Document 3, whereas Patent Document 4 describes a single-film membrane including at least one hydrophilic interface for breaking water down into its components, and including one or more inorganic compounds.

Patent Document 1: JP-A-2001-118591
Patent Document 2: JP-A-6-103992
Patent Document 3: US 2004/112 754 A1
Patent Document 4: US-patent 5,840,192

Non-Patent Document 1: Summary of debrief session for polymer electrolyte fuel cells research and development achievement in 2000 sponsored by New Energy and Industrial Technology Development Organization, page 56, lines 16 to 24.

Accordingly, for the practical application of a polymer electrolyte fuel cell to e.g. vehicles or housing markets, it is an object of the present invention to provide a membrane for a polymer electrolyte fuel cell, whereby power generation with sufficiently high energy efficiency is possible, high power generation property is achieved, and stable power generation is possible over a long period of time, either in its operation under low or no humidification where the humidification temperature (dew point) of the feed gas is lower than the cell temperature or in its operation under high humidification where humidification is carried out at a temperature close to the cell temperature.

The present inventor has conducted extensive studies on fuel cells employing an ion exchange membrane made of a polymer having cation exchange groups, for the purpose of preventing deterioration of the membrane in operation under low or no humidification, and as a result, he has found that deterioration of the electrolyte membrane can be remarkably suppressed by incorporating specific ions into the membrane, and accomplished the invention.

The present invention provides an electrolyte membrane for a polymer electrolyte fuel cell, which comprises a cation exchange membrane made of a polymer having cation exchange groups, characterized by containing manganese ions in an amount of from 1.5 to 20% of the number of $-SO_3^-$ groups in the membrane (hereinafter this ratio will be referred to as the "content of manganese ions"). In the present invention and in the following, the polymer having cation exchange groups is a polymer having sulfonic acid groups as cation exchange groups. Here, the manganese ions may be bivalent or trivalent, but the valence is not particularly limited in the present invention.

Further, the present invention provides the above electrolyte membrane for a polymer electrolyte fuel cell, which comprises a cation exchange membrane having at least two layers made of a polymer having, sulfonic acid, groups laminated, **characterized in that** at least one of the at least two layers contains manganese ions.

The manganese ions may be present in any state in the electrolyte membrane so long as they are present as ions, and as one embodiment, they may be present in such a state that some of the cation exchange groups in the cation exchange membrane are ion-exchanged with manganese ions. Thus, the present invention further provides the above electrolyte membrane for a polymer electrolyte fuel cell, wherein some of the sulfonic acid groups are ion-exchanged with manganese ions.

The electrolyte membrane of the present invention does not necessarily uniformly contain manganese ions. It may be a cation exchange membrane (laminated membrane) comprising at least two layers, wherein some of the cation exchange groups are ion-exchanged with manganese ions in at least one layer, not in all the layers, i.e. the electrolyte membrane may contain manganese ions non-uniformly in the thickness direction. Therefore, in a case where it is required to increase durability against hydrogen peroxide or peroxide radicals particularly on the anode side, it is possible to employ an ion exchange membrane containing manganese ions only for the layer closest to the anode.

Further, the present invention provides a process for producing an electrolyte membrane for a polymer electrolyte fuel cell, which comprises immersing a cation exchange membrane made of a polymer having sulfonic acid groups a cation exchange groups in an aqueous solution containing manganese ions, such that the manganese ions are contained in an amount of from 1.5 to 20% of the number of $-SO_3^-$ groups in the membrane (hereinafter this ratio will be referred to as the "content of manganese ions").

Further, the present invention provides a membrane-electrode assembly for a polymer electrolyte fuel cell, which comprises an anode and a cathode each having a catalyst layer containing a catalyst and an ion exchange resin, and an electrolyte membrane disposed between the anode and the cathode, **characterized in that** the electrolyte membrane is the above-described electrolyte membrane.

The electrolyte membrane obtained by the present invention has excellent resistance to hydrogen peroxide or peroxide radicals. The reason is not clear yet, but it is estimated as follows. By incorporation of manganese ions in the electrolyte membrane, particularly by ion-exchange of some of cation exchange groups with manganese ions, the interaction between the manganese ions and a residue after dissociation of protons from the cation exchange groups (such as $-SO_3^-$) effectively improves the resistance of the electrolyte membrane to hydrogen peroxide or peroxide radicals.

Since the electrolyte membrane of the present invention has excellent resistance to hydrogen peroxide or peroxide radicals, a polymer electrolyte fuel cell provided with a membrane-electrode assembly having the electrolyte membrane of the present invention is excellent in durability and capable of generating the electric power stably over a long period of time.

In the present invention, the polymer having cation exchange groups before incorporation of manganese ions is not particularly limited so long as it has a function to produce protons by dissociation of the cation exchange groups. The present invention will be described below with reference to a polymer having sulfonic acid groups.

The method of incorporating manganese ions into a polymer having sulfonic acid groups to obtain the electrolyte membrane of the present invention is not particularly limited, and the following methods may, for example, be mentioned. (1) A method of immersing a membrane made of a polymer having sulfonic acid groups in a solution containing manganese ions. (2) A method of adding a salt containing a manganese ion to a dispersion of a polymer having sulfonic acid groups to incorporate manganese ions in the dispersion, or mixing a solution containing manganese ions and a dispersion of a polymer having sulfonic acid groups to incorporate manganese ions, and forming a membrane employing the obtained liquid by e.g. cast coating. (3) A method of bringing an organic metal complex salt of manganese into contact with a cation exchange membrane made of a polymer having sulfonic acid groups to incorporate manganese ions. (4) A method of adding manganese metal to a dispersion of a polymer having sulfonic acid groups to react sulfonic acid groups with manganese metal thereby to incorporate manganese ions.

In the electrolyte membrane obtained by the above method, some of sulfonic acid groups are considered to be ion-exchanged with manganese ions.

The manganese ions may be bivalent or trivalent, and various manganese salts are used to obtain a solution containing manganese ions. Specific examples of a salt containing bivalent manganese ion include manganese(II) acetate ($Mn(CH_3COO)_2 \cdot 4H_2O$), manganese chloride ($MnCl_2 \cdot 4H_2O$), manganese nitrate ($Mn(NO_3)_2 \cdot 6H_2O$), manganese sulfate ($MnSO_4 \cdot 5H_2O$) and manganese carbonate ($MnCO_3 \cdot nH_2O$). Specific examples of a salt containing trivalent manganese ion include manganese(III) acetate ($Mn(CH_3COOO)_3 \cdot 2H_2O$). In addition, examples of an organic metal complex salt of manganese include manganese(II) acetylacetonate ($Mn(CH_3COCHCOCH_3)_2$). Among them, manganese nitrate and manganese sulfate, which are water soluble and easily handled, are preferred. Further, they are preferred since when the polymer having sulfonic acid groups is subjected to ion exchange by an aqueous solution of either of them, the formed nitric acid or sulfuric acid is easily dissolved in the aqueous solution and removed.

Here, in a case where manganese ions are bivalent for example, when sulfonic acid groups are ion-exchanged with manganese ions, two protons are exchanged with a manganese ion, and $Mn^{2+}$ is bonded to two $-SO_3^-$.

In the present invention, the content of manganese ions contained in the electrolyte membrane is from 1.5 to 20%. In a case where a manganese ion is completely bonded to, two $-SO_3^-$ groups, the above content is the same as the content of sulfonic acid groups ion-exchanged with a manganese ion of from 3 to 40% of the total amount of sulfonic acid groups and the sulfonic acid groups ion-exchanged with a manganese ion (hereinafter this ratio will be referred to as the "substitution ratio").

If the content of manganese ions is lower than this range, no adequate stability against hydrogen peroxide or peroxide radicals may be secured. On the other hand, if the content is higher than this range, no adequate conductivity of hydrogen ions may be secured, whereby the membrane resistance may increase to lower the power generation property.

Here, in a case where the electrolyte membrane of the present invention is a laminated membrane, only the proportion of manganese ions to the $-SO_3^-$ groups of the entire electrolyte membrane has to be within the above range, and the content of manganese ions of the layer containing manganese ions itself may be higher than the above range. Further, a method for preparing the laminated membrane is not particularly limited, although it is preferred to prepare a cation exchange membrane containing manganese ions by any one of the above methods (1) to (4) and then laminate it with a cation exchange membrane containing no manganese ions.

Further, when the preferred range of the content of manganese ions is represented by the proportion to the mass of the electrolyte membrane, the mass of manganese to the mass of the entire electrolyte membrane is preferably from 0.014 to 4.9%, more preferably from 0.027 to 4.1%, furthermore preferably from 0.041 to 3.3%.

In the present invention, the polymer having sulfonic acid groups before incorporation of manganese ions is not particularly limited, but its ion exchange capacity is preferably from 0.5 to 3.0 meq/g dry polymer, more preferably from 0.7 to 2.5 meq/g dry polymer, particularly preferably from 1.0 to 2.5 meq/g dry polymer. If the ion exchange capacity is too low, no satisfactory conductivity of hydrogen ions will be secured when the sulfonic acid groups are ion-exchanged with manganese ions, whereby the membrane resistance will increase to lower the powder generation property. On the other hand, if the ion exchange capacity is too high, the water resistance or the strength of the membrane may decrease. Further, the polymer is preferably a fluoropolymer from the viewpoint of durability, particularly preferably a perfluorocarbon polymer having sulfonic acid groups (which may contain etheric oxygen atom). The perfluorocarbon polymer is not particularly limited, but is preferably a copolymer containing polymerized units based on a perfluorovinyl compound represented by $CF_2=CF-(OCF_2CFX)_m-O_p-(CF_2)_n-SO_3H$ (wherein m is an integer of from 0 to 3, n is an integer of from 1 to 12, p is 0 or 1, and X is a fluorine atom or a trifluoromethyl group) and polymerized units based on tetrafluoroethylene.

Specific preferred examples of the perfluorovinyl compound include compounds represented by the following formulae (i) to (iii). In the following formulae, q is an integer of from 1 to 8, r is an integer of from 1 to 8, and t is an integer of from 1 to 3.

$$CF_2=CFO(CF_2)_q-SO_3H \qquad (i)$$

$$CF_2=CFOCF_2CF(CF_3)O(CF_2)_r-SO_3H \qquad (ii)$$

$$CF_2=CF(OCF_2CF(CF_3))_tO(CF_2)_2-SO_3H \qquad (iii)$$

In a case where a perfluorocarbon polymer having sulfonic acid groups is used, one obtained by fluorination treatment after polymerization and thereby having terminals of the polymer fluorinated may be used. When the terminals of the polymer are fluorinated, more excellent stability against hydrogen peroxide and peroxide radicals will be achieved, whereby the durability will improve.

Further, the polymer having sulfonic acid groups before incorporation of manganese ions may be one other than a perfluorocarbon polymer having sulfonic acid groups. For example, a polymer having such a structure that it has an aromatic ring in the main chain of the polymer or in the main chain and side chains, and that sulfonic acid groups are introduced to the aromatic ring, and having an ion exchange capacity of from 0.8 to 3.0 meq/g dry polymer, may be preferably used. Specifically, the following polymers may, for example, be used.

Sulfonated polyarylene, sulfonated polybenzoxazole, sulfonated polybenzothiazole, sulfonated polybenzoimidazole, sulfonated polysulfone, sulfonated polyether sulfone, sulfonated polyether ether sulfone, sulfonated polyphenylene sulfone, sulfonated polyphenylene oxide, sulfonated polyphenylene sulfoxide, sulfonated polyphenylene sulfide, sulfonated polyphenylene sulfide sulfone, sulfonated polyether ketone, sulfonated polyether ether ketone, sulfonated polyether ketone ketone, sulfonated polyimide, and so on.

The polymer electrolyte fuel cell provided with the electrolyte membrane of the present invention has, for example, the following structure. Namely, the cell is provided with membrane-electrode assemblies, each of which comprises an anode and a cathode each having a catalyst layer containing a catalyst and an ion exchange resin, disposed on both sides of the electrolyte membrane of the present invention. The anode and the cathode of the membrane-electrode assembly preferably have a gas diffusion layer made of carbon cloth, carbon paper, or the like disposed outside the catalyst layer (opposite to the membrane). Separators having grooves formed to constitute flow paths for a fuel gas or an oxidizing agent gas are disposed on both sides of each membrane-electrode assembly. A plurality of membrane-electrode assemblies are stacked with the separators to form a stack, and a hydrogen gas is supplied to the anode side and an oxygen gas or air to the cathode side. A reaction of $H_2 \rightarrow 2H^+ + 2e^-$ takes place on the anodes, and a reaction of $1/2 O_2 + 2H^+ + 2e^- \rightarrow H_2O$ on the cathodes, whereby chemical energy is converted into electric energy.

Furthermore, the electrolyte membrane of the present invention is also applicable to direct methanol fuel cells in which methanol is supplied instead of the fuel gas to the anode side.

The above-mentioned catalyst layer may be obtained in accordance with conventional methods, for example, as follows. First, a conductive carbon black powder carrying particles of a platinum catalyst or a platinum alloy catalyst, is mixed with a solution of a perfluorocarbon polymer having sulfonic acid groups to obtain a uniform dispersion liquid, and gas diffusion electrodes are formed, for example, by any one of the following methods, thereby obtaining a membrane-electrode assembly.

The first method is a method of coating the both surfaces of the electrolyte membrane with the above-mentioned dispersion liquid, drying it, and then attaching two sheets of carbon cloth or carbon paper closely onto the both sides. The second method is a method of applying the above-mentioned dispersion liquid onto two sheets of carbon cloth or carbon paper, drying it, and then placing the two sheets on both sides of the above ion-exchange membrane so that the surfaces coated with the dispersion liquid is close in contact with the ion-exchange membrane. The carbon cloth or carbon paper herein functions as gas diffusion layers to more uniformly diffuse the gas to the catalyst-containing layers, and functions as current collectors.

Furthermore, another available method is such that a substrate separately prepared is coated with the above-mentioned dispersion liquid to make a catalyst layer, such catalyst layers are bonded to an electrolyte membrane by a method such as transcription, then the substrate is peeled off, and the electrolyte membrane is sandwiched between the above-mentioned gas diffusion layers.

There are no particular restrictions on the ion-exchange resin contained in the catalyst layer, and it is preferably a polymer having sulfonic acid groups, more preferably a perfluorocarbon polymer having sulfonic acid groups. The ion-exchange resin in the catalyst layer may contain manganese ions just like the electrolyte membrane of the present invention. Such a resin containing manganese ions can be applied to both anodes and cathodes, and decomposition of the resin can be effectively suppressed, so as to further enhance the durability of the polymer electrolyte fuel cell. Further, an ion-exchange resin containing no manganese ions may be used as the electrolyte membrane so that manganese ions are incorporated only in the ion-exchange resin in the catalyst layer.

In a case where it is desired to incorporate manganese ions into both the ion exchange resin in the catalyst layer and the electrolyte membrane, it is possible, for example, to preliminarily prepare an assembly of a catalyst layer and an electrolyte membrane, and to immerse the assembly into a solution containing manganese ions. Further, in a case where manganese ions are to be contained in the catalyst layer, it is possible to form the catalyst layer by the above method employing, as a coating liquid, one having a catalyst dispersed in a dispersion containing manganese ions and a polymer having sulfonic acid groups. In this case, manganese ions may be contained in either one of the cathode and the anode, or manganese ions may be contained in both the cathode and the anode. Here, the cathode and the anode may be made by using dispersions differing in the content of manganese ions so that the cathode and the anode have different contents of manganese ions. From the viewpoint of improvement in the durability, more preferably, the anode contains from 15 to 45 mol% of manganese ions and the cathode contains from 5 to 15 mol% of manganese ions, relative to the -SO$_3^-$ groups contained in the polymer having sulfonic acid groups, whereby decomposition of the ion exchange resin in the catalyst layer can be effectively suppressed.

The electrolyte membrane of the present invention may be a membrane made of only a polymer having sulfonic acid groups, some of which are replaced by manganese ions, but it may contain another component, or it may be a membrane reinforced by e.g. fibers, woven cloth, nonwoven cloth or a porous material of another resin such as a polytetrafluoroethylene or a perfluoroalkyl ether. Even in the case of a reinforced membrane, the electrolyte membrane of the present invention can be obtained by immersing a reinforced cation exchange membrane having sulfonic acid groups in a solution containing manganese ions. Further, a method of preparing a membrane by using a dispersion containing a polymer ion-exchanged with manganese ions may also be applicable. In a case where the electrolyte membrane is reinforced, the whole membrane may be reinforced, or the circumference of the membrane may be reinforced in a frame-like shape with a film, a sheet or the like. If the membrane is reinforced in a frame-like shape, the strength around the circumference will increase whereby to improve handling efficiency. The whole membrane may be reinforced with a reinforcing material having a high percentage of void and only the circumference may be reinforced with a reinforcing material having a low percentage of void or having no void.

The polymer electrolyte fuel cell provided with the membrane-electrode assembly of the present invention is excellent in the durability even at high temperature, whereby it can operate at 100°C or higher to generate the electric power. In a case where the fuel gas is hydrogen obtained by reforming methanol, natural gas, gasoline or the like, if carbon monoxide is contained even in a trace amount, the electrolyte catalyst will be poisoned, and the output of the fuel cell tends to be low. When the operation temperature is at least 100°C, it is possible to suppress the poisoning. The operation temperature is more preferably at least 120°C, whereby the effect of suppressing the poisoning tends to be high.

Now, the present invention will be described in further detail with reference to Examples (Examples 1 to 5, 10, 12 and 13) and Comparative Examples (Examples 6 to 9 and 11). However, it should be understood that the present invention is by no means restricted to such specific Examples.

EXAMPLE 1

As a polymer electrolyte membrane, an ion exchange membrane having a thickness of 50 $\mu$m, made of a perfluorocarbon polymer having sulfonic acid groups (Flemion, trade name, manufactured by Asahi Glass Company, Limited, ion exchange capacity: 1.1 meq/g dry polymer) in a size of 5 cm x 5 cm (area 25 cm$^2$) was used. The weight of the entire membrane, after being left to stand in dry nitrogen for 16 hours, was measured in dry nitrogen and found to be 0.251 g. The amount of sulfonic acid groups in this membrane is obtained from the following formula:

$$\texttt{0.251 (g)} \times \texttt{1.1 (meq/g dry polymer)} = \texttt{0.276 (meq)}$$

Then, 12.0 mg of manganese nitrate (Mn(NO$_3$)$_2$·6H$_2$O) was dissolved in 500 mL of distilled water so that manganese ions (bivalent) in an amount corresponding to 30% of the amount (equivalent) of sulfonic acid groups in this membrane were contained, and the above ion exchange membrane was immersed in the solution, followed by stirring by a stirrer at room temperature for 40 hours so that some of the sulfonic acid groups in the ion exchange membrane were ion-exchanged with manganese ions. The manganese nitrate solution was analyzed by inductively-coupled plasma (ICP) emission spectrometry before and after the immersion and as a result, the content of manganese ions in the ion exchange membrane (the proportion of manganese ions to the number of -SO$_3^-$ groups in the membrane) was found to be 14%.

Then, 5.1 g of distilled water was mixed with 1.0 g of a catalyst powder (manufactured by N.E. CHEMCAT CORPORATION) in which platinum was supported on a carbon carrier (specific surface area: 800 m$^2$/g) so as to be contained in an amount of 50% of the whole mass of the catalyst. With this liquid mixture, 5.6 g of a liquid having a CF$_2$=CF$_2$/CF$_2$=CFOCF$_2$CF(CF$_3$)O(CF$_2$)$_2$SO$_3$H copolymer (ion exchange capacity: 1.1 meq/g dry polymer) dispersed in ethanol and having a solid content concentration of 9 mass% was mixed. This mixture was homogenized by using a homogenizer (Polytron, trade name, manufactured by Kinematica Company) to obtain a coating fluid for forming a catalyst layer.

This coating fluid was applied by a bar coater on a substrate film made of polypropylene and then dried for 30 minutes in a dryer at 80°C to obtain a catalyst layer. Here, the mass of the substrate film alone before formation of the catalyst layer and the mass of the substrate film after formation of the catalyst layer were measured to determine the amount of platinum per unit area contained in the catalyst layer, whereupon it was 0.5 mg/cm$^2$.

Then, using the above ion exchange membrane containing 14% of manganese ions, catalyst layers formed on the substrate film were disposed on both sides of the membrane and transferred-by hot press method to obtain a membrane-catalyst layer assembly having an anode catalyst layer and a cathode catalyst layer bonded to both sides of the ion exchange membrane. The electrode area was 16 cm$^2$.

This membrane-catalyst layer assembly was interposed between two gas diffusion layers made of carbon cloth having a thickness of 350 μm to prepare a membrane-electrode assembly, which was assembled into a cell for power generation, and an open circuit voltage test (OCV test) was carried out as an accelerated test. In the test, hydrogen (utilization ratio: 70%) and air (utilization ratio: 40%) corresponding to a current density of 0.2 A/cm$^2$ were supplied under ordinary pressure to the anode and to the cathode, respectively, the cell temperature was set at 90°C, the dew point of the anode gas was set at 60°C and the dew point of the cathode gas was set at 60°C, the cell was operated for 100 hours in an open circuit state without generation of electric power, and a voltage change was measured during the period. Furthermore, by supplying hydrogen to the anode and nitrogen to the cathode, amounts of hydrogen gas having leaked from the anode to the cathode through the membrane were analyzed before and after the test, thereby to check the degree of degradation of the membrane. The results are shown in Table 1.

Then, a membrane-electrode assembly was prepared and assembled into a cell for power generation in the same manner as above, and a durability test under operation conditions under low humidification was carried out. The test conditions were as follows. Hydrogen (utilization ratio: 70%)/air (utilization ratio: 40%) was supplied under ordinary pressure at a cell temperature at 80°C and at a current density of 0.2 A/cm$^2$, and the polymer electrolyte fuel cell was evaluated as to the initial property and durability. Hydrogen and air were so humidified and supplied into the cell that the dew point on the anode side was 80°C and that the dew point on the cathode side was 50°C, respectively, whereupon the cell voltage at the initial stage of the operation and the relation between the elapsed time after the initiation of the operation and the cell voltage were measured. The results are shown in Table 2. In addition, the cell voltage at the initial state of the operation and the relation between the elapsed time after the initiation of the operation and the cell voltage were also measured in the same manner as above under the above cell evaluation conditions except that the dew point on the cathode side was changed to 80°C. The results are shown in Table 3.

EXAMPLE 2

In the same manner as in Example 1 except that an aqueous solution having 10.0 mg of manganese sulfate (MnSO$_4$·5H$_2$O) containing manganese ions (bivalent) dissolved in 500 mL of distilled water is used instead of the manganese nitrate aqueous solution used in Example 1, the same commercially available ion exchange membrane used in Example 1 is treated to obtain a membrane having a content of manganese ions of 14%. Using this membrane, in the same manner as in Example 1, a membrane-catalyst layer assembly is obtained and then a membrane-electrode assembly is obtained. The membrane-electrode assembly is evaluated in the same manner as in Example 1, whereupon results shown in Tables 1 to 3 are obtained.

EXAMPLE 3

In the same manner as in Example 1 except that an aqueous solution having 8.0 mg of manganese nitrate (Mn(NO$_3$)$_2$·6H$_2$O) dissolved in 500 mL of distilled water is used instead of the manganese nitrate aqueous solution used in Example 1, the same commercially available ion exchange membrane used in Example 1 is treated to obtain a membrane having a content of manganese ions of 9.5%. Using this membrane, in the same manner as in Example 1, a membrane-catalyst layer assembly is obtained and then a membrane-electrode assembly is obtained. The membrane-electrode assembly is evaluated in the same manner as in Example 1, whereupon results shown in Tables 1 to 3 are obtained.

EXAMPLE 4

In the same manner as in Example 1 except that an aqueous solution having 4.0 mg of manganese sulfate (Mn(NO$_3$)$_2$·6H$_2$O) dissolved in 500 mL of distilled water is used instead of the manganese nitrate aqueous solution used in Example 1, the same commercially available ion exchange membrane used in Example 1 is treated to obtain a membrane having a content of manganese ions of 5%. Using this membrane, in the same manner as in Example 1, a membrane-catalyst layer assembly is obtained and then a membrane-electrode assembly is obtained. The membrane-electrode assembly is evaluated in the same manner as in Example 1, whereupon results shown in Tables 1 to 3 are obtained.

EXAMPLE 5

As a polymer electrolyte membrane, an ion exchange membrane having a thickness of 50 μm made of a polymer wherein some of sulfonic acid groups of a polyether ether ketone having sulfonic acid groups were ion-exchanged with manganese ions, was prepared as follows. Namely, 60 g of commercially available granular polyether ether ketone (PEEK-450P manufactured by British Victrex Company) was added gradually to 1,200 g of 98% sulfuric acid at room temperature, followed by stirring at room temperature for 60 hours to obtain a uniform solution of a polymer in which sulfonic acid groups were introduced into polyether ether ketone. Then, this solution was gradually dropwise added to 5 L of distilled water under cooling to precipitate the polyether ether ketone having sulfonic acid groups, which was separated by filtration. Then, the separated product was washed with distilled water until the washing liquid became neutral. Thereafter, it was dried under vacuum at 80°C for 24 hours to obtain 48 g of polyether ether ketone having sulfonic acid groups.

Then, about 1 g of this compound was precisely weighed and immersed in 500 mL of a 1 N sodium chloride aqueous solution and reacted at 60°C for 24 hours so that protons of the sulfonic acid groups and sodium ions were ion-exchanged. This sample was cooled to room temperature and then sufficiently washed with distilled water, and the sodium chloride aqueous solution after ion exchange and the distilled water used for washing were titrated with 0.01 N sodium hydroxide to determine the ion exchange capacity. The ion exchange capacity was 1.6 meq/g dry polymer.

Then, the polyether ether ketone having sulfonic acid groups was dissolved in N-methyl-2-pyrrolidone (NMP) to obtain a solution of about 10 mass%, which was applied to a substrate made of polytetrafluoroethylene at room temperature by cast coating and dried in a nitrogen atmosphere at 100°C for 10 hours to evaporate NMP, thereby to obtain a membrane having a thickness of 50 $\mu$m. Then, this membrane was cut into a size of 5 cm x 5 cm (area 25 cm$^2$), and the weight of the entire membrane was measured in the same manner as in Example 1 and found to be 0.168 g. The amount of the sulfonic acid groups in the membrane is obtained from the following formula:

$$0.168 \text{ (g)} \times 1.6 \text{ (meq/g dry polymer)} = 0.269 \text{ (meq)}$$

In the same manner as in Example 1, the above ion exchange membrane is immersed in an aqueous solution having 12.0 mg of manganese nitrate (Mn(NO$_3$)$_2$·6H$_2$O) containing manganese ions (bivalent) corresponding to the amount (equivalent) of about 30% of the amount of sulfonic acid groups in the membrane dissolved in 500 mL of distilled water, followed by stirring by a stirrer at room temperature for 40 hours to obtain a membrane having a content of manganese ions of 15.5%. Then, using this membrane, in the same manner as in Example 1, a membrane-catalyst layer assembly is obtained and then a membrane-electrode assembly is obtained. The membrane-electrode assembly is evaluated in the same manner as in Example 1, whereupon results shown in Tables 1 to 3 are obtained.

EXAMPLE 6

As a polymer electrolyte membrane, the same commercially available ion exchange membrane used in Example 1 was used without any treatment, and using this membrane, in the same manner as in Example 1, a membrane-catalyst layer assembly was obtained and then a membrane-electrode assembly was obtained. The membrane-electrode assembly was evaluated in the same manner as in Example 1, whereupon results shown in Tables 1 to 3 were obtained.

EXAMPLE 7

In the same manner as in Example 1, the same commercially available ion exchange membrane used in Example 1 is immersed in an aqueous solution having 9.8 mg of calcium nitrate (Ca(NO$_3$)$_2$·4H$_2$O) containing calcium ions (bivalent) dissolved in 500 mL of distilled water to obtain a membrane having a content of calcium ions of 15.5%. Then, using this membrane, in the same manner as in Example 1, a membrane-catalyst layer assembly is obtained and then a membrane-electrode assembly is obtained. The membrane-electrode assembly is evaluated in the same manner as in Example 1, whereupon results shown in Tables 1 to 3 are obtained.

EXAMPLE 8

In the same manner as in Example 1, the same commercially available ion exchange membrane used in Example 1 is immersed in an aqueous solution having 10.3 mg of copper sulfate (CuSO$_4$·5H$_2$O) containing copper ions (bivalent) dissolved in 500 mL of distilled water to obtain a membrane having a content of copper ions of 14.5%. Then, using this membrane, in the same manner as in Example 1, a membrane-catalyst layer assembly is obtained and then a membrane-electrode assembly is obtained. The membrane-electrode assembly is evaluated in the same manner as in Example 1, whereupon results shown in Tables 1 to 3 are obtained.

EXAMPLE 9

In the same manner as in Example 5 except that the ion exchange membrane made of polyether ether ketone having sulfonic acid groups obtained in Example 5 is used without treatment with manganese ions, a membrane-catalyst layer assembly is obtained and then a membrane-electrode assembly is obtained. The membrane-electrode assembly is evaluated in the same manner as in Example 1, whereupon results shown in Tables 1 to 3 are obtained.

EXAMPLE 10

In the same manner as in Example 1 except that an aqueous solution having 6.0 mg of manganese nitrate ($Mn(NO_3)_2 \cdot 6H_2O$) dissolved in 500 mL of distilled water was used instead of the manganese nitrate aqueous solution used in Example 1, the same commercially available ion exchange membrane used in Example 1 was treated to obtain a membrane having a content of manganese ions of 7.5%. Then, using this membrane, in the same manner as in Example 1, a membrane-catalyst layer assembly was obtained.

The membrane-catalyst layer assembly was interposed between two gas diffusion layers made of carbon cloth having a thickness of 350 $\mu$m to prepare a membrane-electrode assembly, which was assembled into a cell for power generation, and a durability test under operation conditions under low humidification at 120°C was carried out as follows. Hydrogen (utilization ratio: 50%)/air (utilization ratio: 50%) were supplied to the anode and to the cathode under an elevated pressure of 200 kPa at a cell temperature of 120°C at a current density of 0.2 A/cm$^2$, and the polymer electrolyte fuel cell was evaluated as to the initial property and durability. Hydrogen and air were so humidified and supplied into the cell that the dew point on the anode side was 100°C and that the dew point on the cathode side was 100°C, respectively, whereupon the cell voltage at the initial stage of the operation and the relation between the elapsed time after the initiation of the operation and the cell voltage were measured. The results are shown in Table 4.

EXAMPLE 11

As a polymer electrolyte membrane, the same commercially available ion exchange membrane used in Example 1 was used without any treatment, and using this membrane, in the same manner as in Example 1, a membrane-catalyst layer assembly was obtained and then a membrane-electrode assembly was obtained. The membrane-electrode assembly was evaluated in the same manner as in Example 10, whereupon the power generation voltage suddenly decreased to about 0 V after 110 hours and power generation could be no more possible. After the test, the membrane was taken out and examined and as a result, a large pore was formed on the membrane, which was found to be the cause of the sudden decrease in the voltage.

(Preparation of solution of perfluorocarbon polymer having sulfonic acid groups)

300 g of a $CF_2=CF_2/CF_2=CFOCF_2CF(CF_3)O(CF_2)_2SO_3H$ copolymer (ion exchange capacity: 1.1 meq/g dry polymer), 420 g of ethanol and 280 g of water were charged into a 2 L autoclave, sealed hermetically, and mixed at 105°C for 6 hours by means of a double helical blade to obtain a uniform liquid (hereinafter referred to as "liquid A"). The solid content concentration of the liquid A was 30 mass%.

(Preparation of solution of perfluorocarbon polymer having sulfonic acid groups containing manganese ions)

100 g of the liquid A and 844 mg of manganese carbonate hydrate ($MnCO_3 \cdot nH_2O$, content of manganese of from 41 to 46% of the entire mass) are charged into a 300 mL round-bottomed flask made of glass and stirred at room temperature for 8 hours by a meniscus blade made of PTFE. Bubbles due to generation of $CO_2$ are generated from the start of stirring, and a uniform transparent liquid composition (hereinafter referred to as liquid B) is finally obtained. The solid content concentration of the liquid B is 30.2 mass%, and the content of manganese ions is 20% based on the number of $-SO_3^-$ groups contained in the perfluorocarbon polymer.

EXAMPLE 12

The above liquid A is applied to a 100 $\mu$m ethylene-tetrafluoroethylene copolymer (ETFE) sheet (AFLEX100N, trade name, manufactured by Asahi Glass Company, Limited) by cast coating with a die coater, preliminarily dried at 80°C for 10 minutes and dried at 120°C for 10 minutes and further annealed at 150°C for 30 minutes to obtain an electrolyte membrane having a thickness of 25 $\mu$m. Similarly, the above liquid B is applied on a 100 $\mu$m ETFE sheet by cast coating with a die coater, preliminarily dried at 80°C for 10 minutes and dried at 120°C for 10 minutes, and further annealed at 150°C for 30 minutes to obtain an electrolyte membrane having a thickness of 25 $\mu$m and a content of manganese ions of 20%. Then, these membranes were hot pressed at 150°C to obtain a polymer electrolyte composite membrane having a thickness of 50 $\mu$m in which the content of the manganese ions is nonuniform in the thickness direction.

Then, 5.1 g of distilled water is mixed with 1.0 g of a catalyst powder (manufactured by N.E. CHEMCAT CORPORATION) in which platinum is supported on a carbon carrier (specific surface area: 800 $m^2$/g) so as to be contained, in an amount of 50% of the whole mass of the catalyst. With this liquid mixture, 5.6 g of a liquid having the above liquid A diluted with ethanol to a solid content concentration of 9 mass% is mixed. This mixture is homogenized by using a homogenizer to prepare a coating liquid for forming a catalyst layer.

This coating liquid is applied by a bar coater on a substrate film made of polypropylene and then dried for 30 minutes in a dryer at 80°C to prepare a catalyst layer. Here, the mass of the substrate film alone before formation of the catalyst layer and the mass of the substrate film after formation of the catalyst layer are measured to determine the amount of platinum per unit area contained in the catalyst layer, whereupon it is 0.5 mg/$cm^2$.

Then, using the above composite membrane, the catalyst layer formed on the substrate film is disposed as an anode on the membrane containing manganese ions and the catalyst layer formed on the substrate film is disposed as a cathode on the membrane containing no manganese ions, and these catalyst layers are transferred by hot press method to prepare a membrane-catalyst layer assembly having an anode catalyst layer and a cathode catalyst layer bonded to both sides of the ion exchange membrane. The electrode area is 16 $cm^2$.

Using this membrane-catalyst layer assembly, in the same manner as in Example 1, a membrane-electrode assembly is obtained. The membrane-electrode assembly is subjected to an open circuit voltage test in the same manner as in Example 1, whereupon results are as shown in Table 1.

Then, the membrane-electrode assembly is prepared as mentioned above and assembled into a cell for power generation, and a durability test is carried out under operation conditions under low humidification at high temperature in the same manner as in Example 10. Namely, the test conditions are as follows. Hydrogen (utilization ratio: 50%)/air (utilization ratio: 50%) are supplied to the anode and to the cathode under an elevated pressure of 200 kPa at a cell temperature of 120°C and at a current density of 0.2 A/$cm^2$, and the polymer electrolyte fuel cell is evaluated as to the initial property and durability. Hydrogen and air are so humidified and supplied into the cell that the dew point on the anode side is 100°C and that the dew point on the cathode side is 100°C, respectively, whereupon the cell voltage at the initial stage of the operation and the relation between the elapsed time after the initiation of the operation and the cell voltage are measured. The results are shown in Table 4.

Then, the membrane-electrode assembly is further prepared as mentioned above and assembled into a cell for power generation, and a durability test is carried out under operation conditions under high humidification in the same manner as in Example 1. Namely, the test conditions are as follows. Hydrogen (utilization ratio: 70%)/air (utilization ratio: 40%) are supplied under ordinary pressure at a cell temperature of 80°C and at a current density of 0.2 A/$cm^2$, and the polymer electrolyte fuel cell is evaluated as to the initial property and durability. Hydrogen and air are so humidified and supplied into the cell that the dew point on the anode side is 80°C and that the dew point on the cathode side is 80°C, respectively, whereupon the cell voltage at the initial stage of the operation and the relation between the elapsed time after the initiation of the operation and the cell voltage are measured. The results are shown in Table 3.

EXAMPLE 13

The liquid A is applied on a 100 $\mu$m ETFE sheet by cast coating with a die coater, preliminarily dried at 80°C for 10 minutes and dried at 120°C for 10 minutes, and further annealed at 150°C for 30 minutes to obtain an electrolyte membrane having a thickness of 50 $\mu$m and a size of 5 cm x 5 cm.

Then, 5.1 g of distilled water is mixed with 1.0 g of a catalyst powder (manufactured by N.E. CHEMCAT CORPORATION) in which platinum is supported on a carbon carrier (specific surface area: 800 $m^2$/g) so as to be contained in an amount of 50% of the whole mass of the catalyst. With this liquid mixture, 5.6 g of a liquid having the above liquid B diluted with ethanol to a solid content concentration of 9 mass% is mixed. This mixture is homogenized by using a homogenizer to obtain a coating fluid for forming an anode catalyst layer.

This coating fluid was applied by a bar coater on a substrate film made of polypropylene and then dried for 30 minutes in a dryer at 80°C to prepare an anode catalyst layer containing manganese ions. Here, the mass of the substrate film alone before formation of the catalyst layer and the mass of the substrate film after formation of the catalyst layer are measured to determine the amount of platinum per unit area contained in the catalyst layer, whereupon it is 0.5 mg/$cm^2$.

Separately, a cathode catalyst layer containing no manganese ions is prepared in the same manner as preparation of the anode catalyst layer except that the above liquid A is used instead of the liquid B.

Then, the anode catalyst layer and the cathode catalyst layer each formed on the substrate film are disposed on both sides of the electrolyte membrane prepared by using the liquid A, and the catalyst layers are transferred to the membrane by hot press method to obtain a membrane-catalyst layer assembly having an anode catalyst layer containing manganese ions in an amount of 20 mol% of $-SO_3^-$ groups contained in the perfluorocarbon polymer in the catalyst layer and a cathode catalyst layer containing no manganese ions bonded to both sides of the polymer electrolyte membrane. The electrode area is 16 cm$^2$.

Using the membrane-catalyst layer assembly, a membrane-electrode assembly is obtained. The membrane-electrode assembly is evaluated in the same manner as in Example 1, whereupon results are as shown in Tables 1 to 3.

TABLE 1

| | Open circuit voltage (V) | | Hydrogen leak (ppm) | |
|---|---|---|---|---|
| | Initial | After 100 hours | Initial | After 100 hours |
| Ex. 1 | 0.99 | 0.97 | 710 | 720 |
| Ex. 2 | 0.99 | 0.98 | 700 | 710 |
| Ex. 3 | 0.98 | 0.95 | 730 | 780 |
| Ex. 4 | 0.97 | 0.94 | 750 | 790 |
| Ex. 5 | 0.96 | 0.92 | 850 | 1,100 |
| Ex. 6 | 0.96 | 0.75 | 1,100 | 12,000 |
| Ex. 7 | 0.96 | 0.71 | 850 | 22,000 |
| Ex. 8 | 0.96 | 0.60 | 900 | 35,000 |
| Ex. 9 | 0.94 | 0.51 | 1,300 | 70,000 |
| Ex. 12 | 0.98 | 0.97 | 700 | 710 |
| Ex. 13 | 0.99 | 0.97 | 730 | 780 |

TABLE 2

| | Initial output voltage (V) | Durability/output voltage (V) | |
|---|---|---|---|
| | | After 500 hours | After 2,000 hours |
| Ex. 1 | 0.77 | 0.76 | 0.76 |
| Ex. 2 | 0.77 | 0.76 | 0.76 |
| Ex. 3 | 0.76 | 0.75 | 0.75 |
| Ex. 4 | 0.76 | 0.75 | 0.74 |
| Ex. 5 | 0.75 | 0.73 | 0.72 |
| Ex. 6 | 0.77 | 0.70 | 0.65 |
| Ex. 7 | 0.75 | 0.66 | 0.60 |
| Ex. 8 | 0.75 | 0.62 | 0.55 |
| Ex. 9 | 0.73 | 0.58 | 0.50 |
| Ex. 13 | 0.76 | 0.75 | 0.75 |

TABLE 3

| | Initial output voltage (V) | Durability/output voltage (V) | |
|---|---|---|---|
| | | After 500 hours | After 2,000 hours |
| Ex. 1 | 0.78 | 0.78 | 0.78 |
| Ex. 2 | 0.78 | 0.78 | 0.77 |
| Ex. 3 | 0.78 | 0.77 | 0.77 |
| Ex. 4 | 0.78 | 0.77 | 0.77 |

(continued)

|  | Initial output voltage (V) | Durability/output voltage (V) | |
| --- | --- | --- | --- |
|  |  | After 500 hours | After 2,000 hours |
| Ex. 5 | 0.76 | 0.75 | 0.74 |
| Ex. 6 | 0.77 | 0.73 | 0.70 |
| Ex. 7 | 0.76 | 0.71 | 0.67 |
| Ex. 8 | 0.76 | 0.70 | 0.64 |
| Ex. 9 | 0.74 | 0.65 | 0.60 |
| Ex. 12 | 0.78 | 0.77 | 0.76 |
| Ex. 13 | 0.78 | 0.77 | 0.77 |

TABLE 4

|  | Initial output voltage (V) | Durability/output voltage (V) | |
| --- | --- | --- | --- |
|  |  | After 500 hours | After 2,000 hours |
| Ex. 10 | 0.75 | 0.70 | 0.65 |
| Ex. 11 | 0.76 | Power generation impossible | Power generation impossible |
| Ex. 12 | 0.77 | 0.70 | 0.64 |

It is confirmed from the above results of Examples and Comparative Examples that the open circuit voltage test (OCV test) under high temperature and low humidification conditions as an acceleration test resulted in deterioration of the conventional electrolyte membranes and increase of hydrogen leak due to hydrogen peroxide or peroxide radicals formed on the anode and the cathode, but exhibited the dramatically excellent durability of the electrolyte membrane of the present invention.

The electrolyte membrane of the present invention is very excellent in durability against hydrogen peroxide or peroxide radicals formed by power generation of a fuel cell. Accordingly, a polymer electrolyte fuel cell provided with a membrane-electrode assembly having the electrolyte membrane of the present invention has durability over a long period of time either in power generation under low humidification and in power generation under high humidification and even in power generation at a high temperature of at least 100°C.

**Claims**

1.  An electrolyte membrane for a polymer electrolyte fuel cell, which comprises a cation exchange membrane made of a polymer having sulfonic acid groups as cation exchange groups, **characterized by** containing manganese ions in an amount of from 1.5 to 20% of the number of $-SO_3^-$ groups contained in the cation exchange membrane.

2.  The electrolyte membrane for a polymer electrolyte fuel cell according to claim 1, wherein some of the sulfonic acid groups are ion-exchanged with manganese ions.

3.  The electrolyte membrane for a polymer electrolyte fuel cell according to claim 1 or 2, which comprises a cation exchange membrane having at least two layers made of a polymer having sulfonic acid groups laminated, **characterized in that** at least one of the at least two layers contains manganese ions.

4.  The electrolyte membrane for a polymer electrolyte fuel cell according to any one of claims 1 to 3, wherein the polymer having sulfonic acid groups is a perfluorocarbon polymer having sulfonic acid groups.

5.  The electrolyte membrane for a polymer electrolyte fuel cell according to Claim 4, wherein the perfluorocarbon polymer is a copolymer containing polymerized units based on a perfluorovinyl compound represented by $CF_2=CF-(OCF_2CFX)_m-O_p-(CF_2)_n-SO_3H$ (wherein m is an integer of from 0 to 3, n is an integer of from 1 to 12, p is 0 or 1, and X is a fluorine atom or a trifluoromethyl group) and polymerized units based on tetrafluoroethylene.

6. The electrolyte membrane for a polymer electrolyte fuel cell according to any one of claims 1 to 3, wherein the polymer having sulfonic acid groups has such a structure that it has an aromatic ring in the main chain of the polymer or in the main chain and side chains; and that sulfonic acid groups are introduced to the aromatic ring, and has an ion exchange capacity of from 0.8 to 3.0 meq/g dry polymer.

7. The electrolyte membrane for a polymer electrolyte fuel cell according to any one of Claims 1 to 6, which is a reinforced electrolyte membrane.

8. A process for producing an electrolyte membrane for a polymer electrolyte fuel cell, which comprises immersing a cation exchange membrane made of a polymer having sulfonic acid groups as cation exchange groups in an aqueous solution containing manganese ions, such that the manganese ions are contained in the electrolyte membrane in an amount of from 1.5 to 20% of the number of $-SO_3^-$ groups contained in the cation exchange membrane.

9. The process for producing the electrolyte membrane according to Claim 8, wherein the aqueous solution containing manganese ions is an aqueous manganese nitrate solution or an aqueous manganese sulfate solution.

10. A membrane-electrode assembly for a polymer electrolyte fuel cell, which comprises an anode and a cathode each having a catalyst layer containing a catalyst and an ion exchange resin, and an electrolyte membrane disposed between the anode and the cathode, **characterized in that** the electrolyte membrane is the electrolyte membrane as defined in any one of Claims 1 to 7.

11. The membrane-electrode assembly for a polymer electrolyte fuel cell according to Claim 10, wherein the ion exchange resin contained in at least one of the anode and the cathode contains manganese ions.


**Patentansprüche**

1. Elektrolytmembran für eine Polymerelektrolyt-Brennstoffzelle, welche eine Kationenaustauschmembran umfasst, hergestellt aus einem Polymer mit Sulfonsäuregruppen als Kationenaustauchgruppen, **dadurch gekennzeichnet, dass** sie Manganionen in einer Menge von 1,5 bis 20% der Anzahl an $-SO_3^-$-Gruppen enthält, welche in der Kationenaustauschmembran enthalten sind.

2. Elektrolytmembran für eine Polymerelektrolyt-Brennstoffzelle nach Anspruch 1, wobei einige der Sulfonsäuregruppen mit Manganionen Ionen-ausgetauscht sind.

3. Elektrolytmembran für eine Polymerelektrolyt-Brennstoffzelle nach Anspruch 1 oder 2, welche eine Kationenaustauschmembran mit mindestens zwei laminierten Schichten, hergestellt aus einem Polymer mit Sulfonsäuregruppen, umfasst, **dadurch gekennzeichnet, dass** mindestens eine der mindestens zwei Schichten Manganionen enthält.

4. Elektrolytmembran für eine Polymerelektrolyt-Brennstoffzelle nach einem der Ansprüche 1 bis 3, wobei das Polymer mit Sulfonsäuregruppen ein Perfluorkohlenstoffpolymer mit Sulfonsäuregruppen ist.

5. Elektrolytmembran für eine Polymerelektrolyt-Brennstoffzelle nach Anspruch 4, wobei das Perfluorkohlenstoffpolymer ein Copolymer ist, enthaltend polymerisierte Einheiten auf Basis einer Perfluorvinylverbindung, dargestellt durch $CF_2=CF-(OCF_2CFX)_m-O_p-(CF_2)_n-SO_3H$ (wobei m eine ganze Zahl von 0 bis 3 ist, n eine ganze Zahl von 1 bis 12 ist, p 0 oder 1 ist, und X ein Fluoratom oder eine Trifluormethylgruppe ist), und polymerisierte Einheiten auf Basis von Tetrafluorethylen.

6. Elektrolytmembran für eine Polymerelektrolyt-Brennstoffzelle nach einem der Ansprüche 1 bis 3, wobei das Polymer mit Sulfonsäuregruppen eine solche Struktur aufweist, dass es einen aromatischen Ring in der Hauptkette des Polymers oder in der Hauptkette und den Seitenketten aufweist, und dass Sulfonsäuregruppen in den aromatischen Ring eingeführt sind, und eine Ionenaustauschkapazität von 0,8 bis 3,0 meq/g trockenes Polymer aufweist.

7. Elektrolytmembran für eine Polymerelektrolyt-Brennstoffzelle nach einem der Ansprüche 1 bis 6, welche eine verstärkte Elektrolytmembran ist.

**8.** Verfahren zur Herstellung einer Elektrolytmembran für eine Polymerelektrolyt-Brennstoffzelle, welches das Eintauchen einer Kationenaustauschmembran, hergestellt aus einem Polymer mit Sulfonsäuregruppen als Kationenaustauschgruppen, in eine Manganionen enthaltende wässrige Lösung umfasst, so dass die Manganionen in einer Menge von 1,5 bis 20% der Anzahl an $-SO_3^-$-Gruppen, welche in der Kationenaustauschmembran enthalten sind, in der Elektrolytmembran enthalten sind.

**9.** Verfahren zur Herstellung der Elektrolymembran nach Anspruch 8, wobei die Manganionen enthaltende wässrige Lösung eine wässrige Mangannitratlösung oder eine wässrige Mangansulfatlösung ist.

**10.** Membran-Elektrodenbaugruppe für eine Polymerelektrolyt-Brennstoffzelle, welche eine Anode und eine Kathode mit jeweils einer Katalysatorschicht, enthaltend einen Katalysator und ein Ionenaustauschharz, und eine zwischen der Anode und der Kathode angeordnete Elektrolytmembran umfasst, **dadurch gekennzeichnet, dass** die Elektrolytmembran die in einem der Ansprüche 1 bis 7 definierte Elektrolytmembran ist.

**11.** Membran-Elektrodenbaugruppe für eine Polymerelektrolyt-Brennstoffzelle nach Anspruch 10, wobei das in mindestens einer der Anode und der Kathode enthaltene Ionenaustauschharz Manganionen enthält.

**Revendications**

**1.** Membrane électrolytique pour une pile à combustible à électrolyte polymère, qui comprend une membrane échangeuse de cations faite en un polymère comportant des groupes acide sulfonique à titre de groupes échangeurs de cations, **caractérisée en ce qu'**elle contient des ions manganèse en une quantité de 1,5 à 20 % du nombre de groupes $-SO_3^-$ contenus dans la membrane échangeuse de cations.

**2.** Membrane électrolytique pour une pile à combustible à électrolyte polymère selon la revendication 1, dans laquelle certains des groupes acide sulfonique ont subi un échange d'ions avec des ions manganèse.

**3.** Membrane électrolytique pour une pile à combustible à électrolyte polymère selon la revendication 1 ou 2, qui comprend une membrane échangeuse de cations présentant au moins deux couches stratifiées faites en un polymère comportant des groupes acide sulfonique, **caractérisée en ce qu'**au moins l'une des au moins deux couches contient des ions manganèse.

**4.** Membrane électrolytique pour une pile à combustible à électrolyte polymère selon l'une quelconque des revendications 1 à 3, dans laquelle le polymère comportant des groupes acide sulfonique est un polymère perfluorocarboné ayant des groupes acide sulfonique.

**5.** Membrane électrolytique pour une pile à combustible à électrolyte polymère selon la revendication 4, dans laquelle le polymère perfluorocarboné est un copolymère contenant des motifs polymérisés à base d'un composé perfluorovinylique représenté par $CF_2=CF-(OCF_2CFX)_m-O_p-(CF_2)_n-SO_3H$ (où m est un entier de 0 à 3, n est un entier de 1 à 12, p vaut 0 ou 1, et X est un atome de fluor ou un groupe trifluorométhyle) et des motifs polymérisés à base de tétrafluoroéthylène.

**6.** Membrane électrolytique pour une pile à combustible à électrolyte polymère selon l'une quelconque des revendications 1 à 3, dans laquelle le polymère comportant des groupes acide sulfonique présente une structure telle qu'il comporte un cycle aromatique dans la chaîne principale du polymère ou dans la chaîne principale et les chaînes latérales ; et des groupes acide sulfonique sont introduits sur le cycle aromatique, et il présente une capacité d'échange d'ions de 0,8 à 3,0 méq/g de polymère sec.

**7.** Membrane électrolytique pour une pile à combustible à électrolyte polymère selon l'une quelconque des revendications 1 à 6, qui est une membrane électrolytique renforcée.

**8.** Procédé pour produire une membrane électrolytique pour une pile à combustible à électrolyte polymère, qui comprend l'immersion d'une membrane échangeuse de cations, faite en un polymère comportant des groupes acide sulfonique à titre de groupes échangeurs de cations, dans une solution aqueuse contenant des ions manganèse, de telle sorte que les ions manganèse soient contenus dans la membrane électrolytique en une quantité de 1,5 à 20% du nombre de groupes $-SO_3^-$ contenus dans la membrane échangeuse de cations.

9. Procédé pour produire une membrane électrolytique selon la revendication 8, dans lequel la solution aqueuse contenant des ions manganèse est une solution aqueuse de nitrate de manganèse ou une solution aqueuse de sulfate de manganèse.

10. Assemblage de membrane-électrodes pour une pile à combustible à électrolyte polymère, qui comprend une anode et une cathode présentant chacune une couche de catalyseur contenant un catalyseur et une résine échangeuse d'ions, et une membrane électrolytique disposée entre l'anode et la cathode, **caractérisé en ce que** la membrane électrolytique est la membrane électrolytique telle que définie dans l'une quelconque des revendications 1 à 7.

11. Assemblage de membrane-électrodes pour une pile à combustible à électrolyte polymère selon la revendication 10, dans laquelle la résine échangeuse d'ions contenue dans au moins l'une parmi l'anode et la cathode contient des ions manganèse.

**EP 1 777 767 B2**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001118591 A
- JP 6103992 A
- US 2004112754 A1
- US 5840192 A

**Non-patent literature cited in the description**

- Summary of debrief session for polymer electrolyte fuel cells research and development achievement. *New Energy and Industrial Technology Development Organization,* 2000, 56